# EUROPÄISCHE PATENTSCHRIFT

(11) **EP 2 596 297 B1**
(45) Veröffentlichungstag und Bekanntmachung des Hinweises auf die Patenterteilung: **12.08.2015**
(21) Anmeldenummer: 11801546.0
(22) Anmeldetag: 02.06.2011
(51) Int. Cl.: F24J 2/52

(54) **KANTENSCHUTZELEMENT EINER KLEMMEINRICHTUNG FÜR UNGERAHMTE PV-MODULE**
EDGE PROTECTION ELEMENT OF A CLAMPING DEVICE FOR FRAMELESS PV MODULES
ÉLÉMENT DE PROTECTION D'ARÊTE D'UN DISPOSITIF DE SERRAGE POUR MODULES PV SANS CADRE

(30) Priorität: 02.06.2010 DE 102010022472
(43) Veröffentlichungstag der Anmeldung: 29.05.2013
(73) Patentinhaber: Schletter GmbH, 83527 Kirchdorf (DE)
(72) Erfinder: MADLINDL, Stefan, 84453 Mühldorf (DE)
(86) Internationale Anmeldenummer: PCT/DE2011/001318
(87) Internationale Veröffentlichungsnummer: WO 2012/069030

(56) Entgegenhaltungen:
- EP-A1- 1 039 549
- WO-A2-2004/079775
- CN-Y- 201 432 608
- DE-U1-202009 014 048

## Beschreibung

Die Erfindung betrifft ein Kantenschutzelement einer Klemmeinrichtung zum lokalen Befestigen des Modulrands eines ungerahmten PV-Moduls an einer Tragstruktur.

Photovoltaik-Module oder kurz PV-Module werden vorwiegend mit Klemmeinrichtungen befestigt. Solche Klemmeinrichtungen halten lokal die Modulränder von PV-Modulen an einer Tragstruktur fest. In der Regel sind vier Klemmeinrichtungen pro PV-Modul vorgesehen, das heißt zwei für jeden langen Modulrand bei rechteckigem Modulformat.

PV-Module bestehen an ihrer Vorder- und Rückseite oft aus empfindlichen Glasscheiben. Klemmeinrichtungen für die Modulränder ungerahmter PV-Module weisen daher für gewöhnlich zusätzlich elastische Kantenschutzelemente auf, die zwischen der Klemmeinrichtung und der Tragstruktur angeordnet sind und den Modulrand schützen. Aus US 2003/0070368 A1 ist ein solches Kantenschutzelement einer Klemmeinrichtung zum lokalen Befestigen des Modulrands eines ungerahmten PV-Moduls an einer Tragstruktur bekannt.

Ungerahmte PV-Module sollen bei der Befestigung mit Klemmeinrichtungen nur schwach geklemmt oder gar nur niedergehalten werden. Problematisch hierbei ist, dass sich die ungerahmten PV-Module längs der gehaltenen Modulränder leicht lösen und infolge aneinanderstoßen oder im Extremfall aus dem Kantenschutzelement herausrutschen können.

Aus DE 20 2009 014 048 U1 ist für Klemmung ungerahmter PV-Module ein Kantenschutzelement mit Lamellen gemäß dem Oberbegriff des Anspruchs 1 bekannt. Die Lamellen wirken jedoch allenfalls quer zu den gehaltenen Modulrändern rutschhemmend. Wird ein ungerahmtes PV-Modul, das geneigt angeordnet ist, lediglich an seinen schräg von oben nach unten verlaufenden Modulrändern mit derartigen Kantenschutzelementen gehalten, so benötigt man am unteren Modulrand einen zusätzlichen Sicherheitshaken oder vergleichbare Stützmittel, um ein Abrutschen des ungerahmten PV-Moduls zuverlässig zu verhindern, insbesondere im Falle zusätzlicher Schnee- und Eislasten. Derartige Sicherheitshaken sind aus DE 101 32 557 A1 bekannt.

Aufgabe der Erfindung ist es, für eine Klemmeinrichtung zum lokalen Befestigen des Modulrands eines ungerahmten PV-Moduls ein Kantenschutzelement zu entwickeln, das deutlich verbesserte Halteeigenschaften bietet.

Die Aufgabe wird mit dem in Anspruch 1 angegebenen Kantenschutzelement gelöst. Es ist einer Klemmeinrichtung zugeordnet, die zum lokalen Befestigen eines Modulrands eines ungerahmten PV-Moduls an einer Tragstruktur vorgesehen ist, und weist mindestens einen elastischen Belag auf. Der elastische Belag hat wie üblich zwei Hauptseiten, eine Vorderseite und eine davon abgewandte Rückseite. Der elastische Belag ist rückseitig, das heißt mittels seiner Rückseite an der restlichen Klemmeinrichtung und/oder relativ zu der Tragstruktur festlegbar. Gegenüber der Vorderseite des elastischen Belages kann eine Kontaktseite des Modulrands des ungerahmten PV-Moduls angeordnet werden. Die Vorderseite des elastischen Belags ist folglich dazu bestimmt und geeignet, gegenüber der Kontaktseite des Modulrands angeordnet zu werden, sodass die Vorderseite und die Kontaktseite einander zugewandt sind. Besonders kennzeichnend für die Erfindung ist, dass der elastische Belag eine Vielzahl von Saugnapfelementen aufweist. Diese haben wie üblich jeweils umlaufend, das heißt in Umfangsrichtung geschlossene Dichtwände, die elastisch sind und von der Vorderseite des elastischen Belags abstehen und jeweils einen Öffnungsrand aufweisen. An den Öffnungsrändern kann die Kontaktseite des Modulrands dicht angelegt werden. Außerdem enthalten die Saugnapfelemente innenseitig je eine Vertiefung, die an den von den Öffnungsrändern begrenzten Öffnungen offen und ansonsten luftdicht sind. Das Volumen der Vertiefungen ist vorteilhaft mit elastischer Verformung der Dichtwände veränderbar.

Die Kontaktseite des Modulrands kann an den Saugnapfelementen des elastischen Belages mittels Saugwirkung anhaften, sodass die Gefahr des Verrutschens des PV-Moduls insbesondere in Längsrichtung des befestigten Modulrands erheblich gemindert wird. Zum Erzeugen der Saugwirkung werden die Dichtwände und die Kontaktseite vorzugsweise beim Befestigen der Klemmeinrichtung relativ gegeneinander gedrückt, wodurch die Dichtwände elastisch aufgeweitet und/oder gestaucht werden und sich infolge das Volumen der innenliegenden Vertiefungen verringert, wobei an den Öffnungsrändern der Dichtwände Luft aus den Vertiefungen entweicht. Bei geringstem Nachlassen der Andruckkraft entsteht in den Vertiefungen ein Unterdruck aufgrund der elastischen Rückstellbewegung der Dichtwände und dem vergrößertem Volumen bei gleichbleibender Luftmenge in den Vertiefungen. Der Unterdruck beziehungsweise die Saugwirkung führt zur gewünschten Steigerung der Haltewirkung und tritt in vorteilhafter Weise insbesondere dann ein, wenn die Andruckkraft zwischen der Kontaktseite und den Dichtwänden nachlässt. Zur Festlegung des Belags kann ein einfaches Anlegen mittels seiner Rückseite ausreichend sein, sodass der Belag beim Andrücken der Kontaktseite des Modulrands gegen die Dichtwände des Belags nicht ausweichen kann. Darüber hinaus ist von Vorteil, dass Maßtoleranzen und deformationsbedingte Spannungen des PV-Moduls mittels den Dichtwänden ausgeglichen werden können. Besonders von Vorteil ist es, dass nun bei ungerahmten PV-Modulen, die geneigt angeordnet sind und lediglich an ihren schräg von oben nach unten verlaufenden Modulrändern mit den erfindungsgemäßen Kantenschutzelementen befestigt sind, auf zusätzliche Sicherungsmaßnahmen gegen Abrutschen verzichtet werden kann. Die Montage der aus dem Stand der Technik bekannten Sicherungshaken zum Halten des untern Modulrands kann somit entfallen.

Wegen der signifikant verbesserten Halteeigenschaften des Kantenschutzelements kann es sehr zweckmäßig sein, wenn das Kantenschutzelement an der Klemmeinrichtung zusätzlich in Längsrichtung des zu befestigenden Modulrands festgelegt ist, insbesondere mittels formschlüssigen Ineinandergreifen oder Kleben. Dies verhindert selbst bei einer durch das PV-Modul bewirkten starken Hangabtriebskraft ein Verrutschen des Kantenschutzelements relativ zur Klemmeinrichtung.

In einer einfachen Form kann das Kantenschutzelement im Wesentlichen flächig ausgeführt sein. Auch sind mehrteilige Ausführungsformen möglich. Vorzugweise ist das Kantenschutzelement im Querschnitt etwa L- oder U-förmig ausgeführt, um den Modulrand zwei- oder dreiseitig zu schützen.

Um das Haltevermögen weiter zu steigern, kann das Kantenschutzelement eine zweiten solchen Belag mit Saugnapfelementen aufweisen, wobei der zweite Belag dem ersten Belag beabstandet gegenüberliegt und für eine zweite Kontaktseite des Modulrands vorgesehen ist. Dadurch kann der Modulrand sowohl mittels einer unteren Kontaktseite an den Öffnungsrändern der Dichtwände des ersten Belags als auch mittels einer oberen Kontaktseite an den Öffnungsrändern der Dichtwände des zweiten Belags dicht anliegen.

In vorteilhafter Ausgestaltung sind die Dichtwände rotationssymmetrisch ausgeführt. Die Wanddicke der Dichtwände kann sich mit zunehmender Höhe bezüglich der Vorderseite verjüngen, was ein elastisches Aufweiten der Dichtwände begünstigt. Außerdem können in einem unbelasteten Zustand die außenseitig etwa senkrecht bezüglich der Vorderseite sein oder außenseitig steiler bezüglich der Vorderseite sein als innenseitig. Insbesondere können sich die Vertiefungen mit zunehmender Tiefe verjüngen. Die vorgenannten geometrischen Formen können die Herstellung einer Gussform und das Entformen daraus sowie zugleich die Funktion als Saugnapf begünstigen.

Das Kantenschutzelement weist bevorzugt zwischen 15 und 150 Saugnapfelemente auf. Die Höhe der Dichtwände bezüglich der Vorderseite liegt vorzugsweise in einem Bereich zwischen 0.3 und 1.2 mm, insbesondere zwischen 0.5 und 0.8 mm. Der Belag kann bevorzugt eine Grundfläche im Bereich 8 mm mal 50 mm bis 30 mm mal 120 mm aufweisen.

Zur Verbesserung der Halteeigenschaften kann es vorteilhaft sein, wenn die Höhe der Dichtwände zu bezüglich des Modulrands quer gerichteten Enden des elastischen Belags schrittweise abnimmt. Auf diese Art können etwaige Deformationen und dadurch verursachte Spannungen noch besser ausgeglichen werden.

Das Kantenschutzelement und/oder der elastische Belag bestehen vorzugsweise aus einem EPDM-Material. Andere vergleichbare elastische Materialien, insbesondere witterungsbeständige, sind ebenso denkbar. Eine Shore-Härte im Bereich zwischen 45 und 70 hat sich für die Funktion der Saugnapfelemente als günstig erwiesen.

Die Erfindung betrifft auch eine Anordnung des Kantenschutzelementes einer Klemmeinrichtung der vorgenannten Art, wobei der Modulrand des ungerahmten PV-Moduls lokal mittels der Klemmeinrichtung an der Tragstruktur befestigt ist, und der elastische Belag mittels seiner Rückseite an der restlichen Klemmeinrichtung und/oder relativ zu der Tragstruktur festgelegt ist und die Kontaktseite des Modulrands an den Öffnungsrändern der Dichtwände dicht anliegt. Hierbei ist weiter von Vorteil, wenn die Dichtwände elastisch aufgeweitet und/oder gestaucht sind, sodass das Volumen der Vertiefungen kleiner ist, als das Volumen der Vertiefungen bei unbelasteten Dichtwänden. Eine solche Anordnung wirkt sich besonders vorteilhaft aus, wenn das ungerahmte PV-Modul geneigt angeordnet ist und der mittels Klemmeinrichtung befestigte Modulrand ein schräg von oben nach unten verlaufender Modulrand des ungerahmten PV-Moduls ist. Hierbei kann aufgrund der in Längsrichtung des Modulrands verbesserten Halteeigenschaft auf sonst erforderliche zusätzliche Abrutschsicherungen verzichtet werden.

Die Erfindung betrifft schließlich auch ein Verfahren zum Befestigen des Modulrands eines ungerahmten PV-Moduls mittels einer Klemmeinrichtung mit einem Kantenschutzelement der vorgenannten Art. Darin ist vorgesehen, dass beim Befestigen der Klemmeinrichtung an der Tragstruktur die Öffnungsränder der Dichtwände der Saugnapfelemente und die Kontaktseite des Modulrands gegeneinander gedrückt werden, sodass das Volumen der Vertiefungen der Saugnapfelemente verringert wird.

Nachfolgend wird die Erfindung anhand eines Ausführungsbeispiels unter Bezugnahme auf Zeichnungen näher erläutert. Es zeigt:
**Fig. 1** eine Perspektive einer Anordnung eines ungerahmten PV-Moduls, das auf einer
Tragschiene mittels einer Klemmeinrichtung mit Kantenschutzelement befestigt ist **Fig. 2** die Anordnung gemäß **Fig. 1** in Seitenansicht
**Fig. 3** das Kantenschutzelement und die Klemmeinrichtung gemäß **Fig. 1** separat in einer Detailperspektive
**Fig. 4** einen schematischen Detailschnitt der Anordnung gemäß **Fig. 1** in einem Zustand vor der Befestigung und ohne ungerahmten PV-Modul
**Fig.** 5 einen schematischen Detailschnitt der Anordnung gemäß **Fig. 1** **in** einem Zustand nach der Befestigung

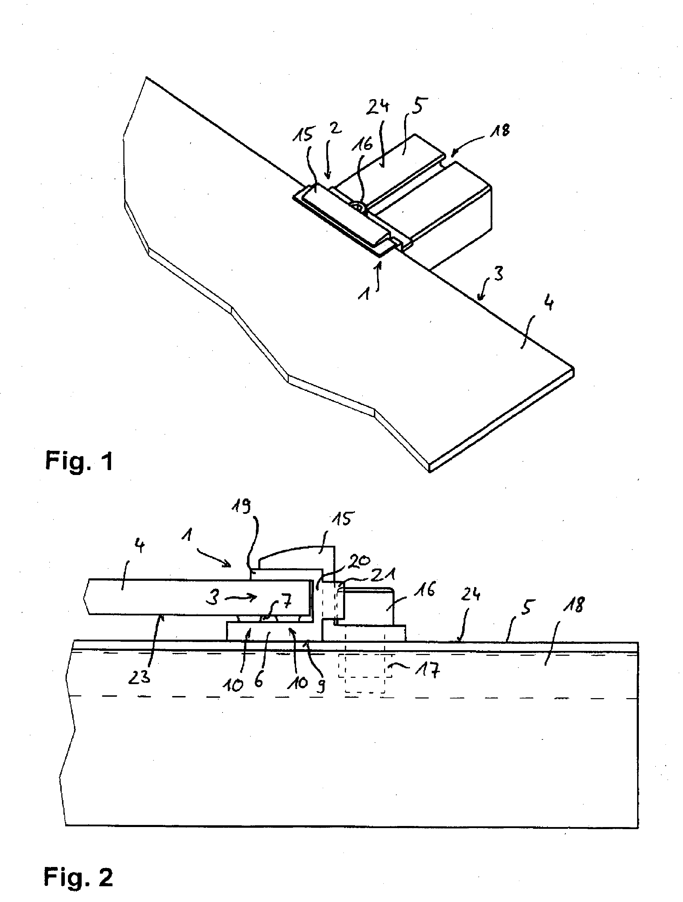

**Fig. 1** und **Fig. 2** zeigen eine Anordnung mit einem ungerahmten PV-Modul **4** und einer Tragschiene **5.** Ein gerader Modulrand **3** des PV-Moduls **4** ist lokal mittels einer Klemmeinrichtung **2** auf der Tragschiene **5** befestigt, wobei zum Schutz des Modulrands **3** ein Kantenschutzelement **1** vorgesehen ist.

Die Tragschiene **5** ist nicht näher ersichtlich ortsfest angeordnet, insbesondere auf einem Dach oder mittels Aufständerung auf einem freien Gelände. An ihrer Oberseite **24** enthält die Tragschiene **5** für Befestigungszwecke eine hinterschnittene Nut **18.** Die Tragschiene **5** ist quer zu dem Modulrand **3** gerichtet, wobei auch eine dazu parallele Anordnung möglich ist.

Das ungerahmte PV-Modul **4** weist nicht näher ersichtlich ein rechteckiges Format von beispielsweise 800 mm mal 1200 mm auf und ist demgegenüber sehr flach, etwa 4 mm. Der Modulrand **3** kann entsprechend auch als Kante im allgemeinen Sinn bezeichnet werden. Nicht näher ersichtlich ist, dass der Modulrand **3** ein Längsrand des PV-Moduls **4** ist. Ebenfalls nicht näher ersichtlich ist, dass das ungerahmte PV-Modul **4** geneigt angeordnet ist und der Modulrand **3** schräg von oben nach unten verläuft.

Die als Endklemme ausgeführte Klemmeinrichtung **2** weist einen starren Haltekörper **15** zum Niederhalten und seitlichen Festlegen des Modulrands **3** sowie eine Schraube **16** und eine Mutter **17** auf. Mittels der Schraube **16** und der Mutter 17 ist der Haltekörper **15** direkt gegen die Tragschiene **5** geklemmt. Die Mutter **17** hintergreift hierzu die Nut **18** der Tragschiene **5.**

Das Kantenschutzelement **1** besitzt einen U-förmigen Querschnitt und umfasst den Modulrand **3** in einem lokalen Bereich dreiseitig mit einem unteren Belag **6,** einem oberen Belag **19** sowie einem seitlichen Belag **20.** Die Beläge **6,19** und **20** sind integral miteinander verbunden und außerdem elastisch. PV-Modul **4** ist daher mit seinem Modulrand **3** in dem Kantenschutzelement **1** dreiseitig aufgenommen und geschützt.

Der untere Belag **6** weist wie für Beläge üblich zwei Hauptseiten auf, eine Vorderseite **8** und eine dazu parallel und davon abgewandte Rückseite **9.** Der untere Belag **6** liegt rückseitig, das heißt mittels seiner Rückseite **9** direkt an der Oberseite **24** der Tragschiene **5** an und ist daher relativ zu dieser festgelegt. Der untere Belag **6** kann somit bei einer Belastung auf seine Vorderseite **8** nicht ausweichen. Zwischen der Oberseite **24** der Tragschiene **5** und der Rückseite des unteren Belags **6** können alternativ Stützelemente, Abstandselemente oder dergleichen beigelegt sein. Parallel gegenüber der Vorderseite **8** des unteren Belags **6** ist eine untere Kontaktseite **7** des Modulrands **3** angeordnet. Die Vorderseite **8** und die Kontaktseite **7** sind demnach einander zugewandt. Die untere Kontaktseite 7 des Modulrands **3** ist Bestandteil der Rückseite **23** des ungerahmten PV-Moduls **4.**

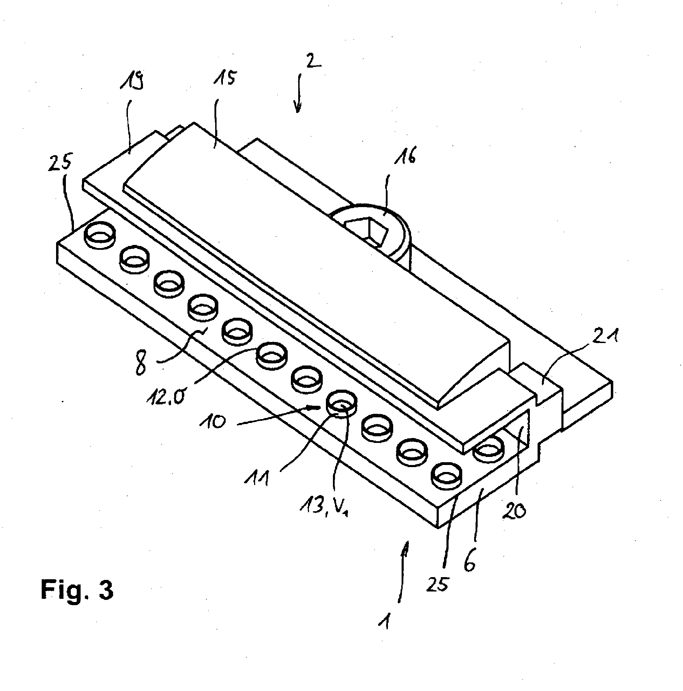

Wie insbesondere aus **Fig. 3** zu erkennen ist, weist der untere Belag **6** eine Vielzahl elastischer Saugnapfelemente **10** auf. Es sind zwei parallele Reihen mit je elf Saugnapfelementen **10** vorgesehen, wobei nicht alle davon erkennbar sind. Die Saugnapfelemente **10** sind identisch ausgeführt und weisen umlaufend geschlossene Dichtwände **11** auf, die elastisch sind und von der Vorderseite **8** des Belages **6** abstehen. Die Dichtwände **11** sind rotationssymmetrisch und daher an ihrem oberen Ende, das heißt an ihrem Öffnungsrand **12** kreisrund zu erkennen. Wie aus **Fig. 2** ersichtlich ist, liegt an den Öffnungsrändern **12** der Dichtwände **11** die Kontaktseite **7** des Modulrands **3** luftdicht an.

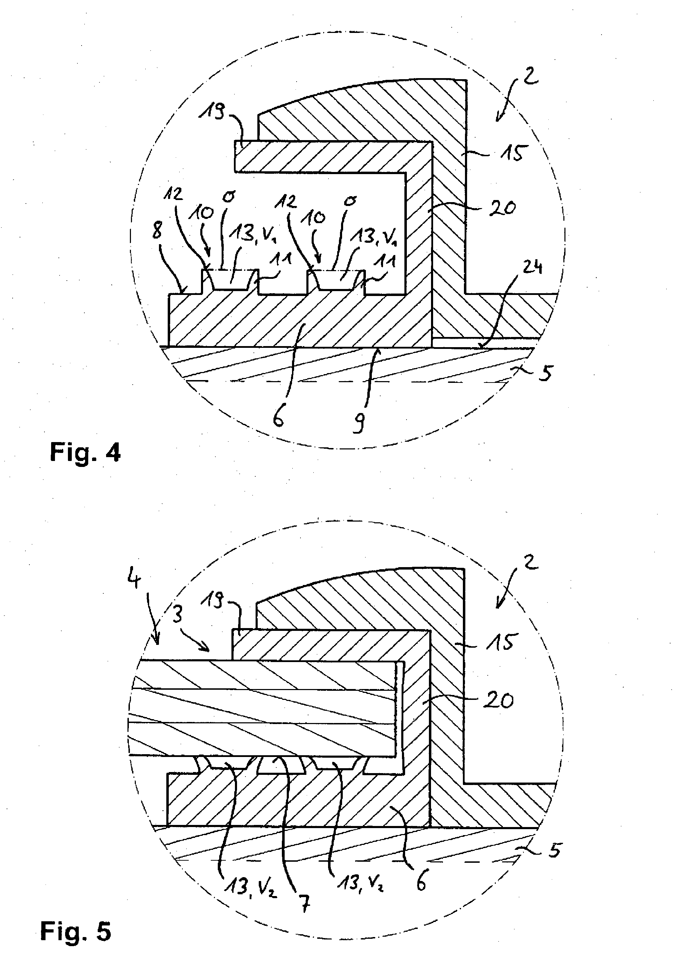

In **Fig. 3** ist weiter zu erkennen, dass die Saugnapfelemente **10** innenseitig je eine Vertiefung **13** enthalten, die zu einer von dem Öffnungsrand **12** begrenzten Öffnung O hin offen und ansonsten stets luftdicht ist. Das Volumen der Vertiefungen **13** kann mit elastischer Verformung der Dichtwände **11** verändert werden, wie **Fig. 4** und **Fig. 5** nachfolgend zeigen.

In einem Zustand gemäß **Fig. 4** vor der Befestigung und ohne eingefügtem Modulrand **3** sind die Dichtwände **11** entlastet. Zu erkennen ist, dass die Dichtwände **11** außenseitig etwa senkrecht bezüglicher der Vorderseite **8** beziehungsweise als gerader Zylinder zu erkennen sind. Die Höhe der Dichtwände **11** gegenüber der Vorderseite **8** beträgt weniger als einen Millimeter.

Die in den Saugnapfelementen **10** enthaltenen Vertiefungen **13** verjüngen sich in Richtung zu der Vorderseite **8** beziehungsweise mit zunehmender Tiefe, sodass die Dichtwände **13** im entlasteten Zustand innenseitig überwiegend weniger steil bezüglicher der Vorderseite **8** sind als außenseitig, insbesondere im oberen Endbereich der Dichtwände **11.** Dadurch wird ein Aufweiten der Dichtwände **11** bei einer Druckbelastung begünstigt. Im entlasteten Zustand weisen die Vertiefungen **13** unterhalb der strickpunktierten Linien, welche die von den Öffnungsrändern **12** begrenzten Öffnungen **O** repräsentieren, jeweils ein Volumen V₁ auf.

In einem Zustand gemäß **Fig. 5** nach der Befestigung mit eingefügtem Modulrand **3** liegt dessen Kontaktseite **7** auf den Öffnungsrändern **12** der Dichtwände **11** luftdicht auf. Außerdem ist der Haltekörper **15** nun gegen die Tragschiene **5** gespannt, wodurch die Kontaktseite **7** und die Dichtwände **11** gegeneinander gedrückt sind, sodass sich die Dichtwände **11** elastisch verformt haben. Wie weiter zu erkennen ist, sind die Dichtwände **11** symmetrisch aufgeweitet und in ihrer Höhe gestaucht. Das geänderte Volumen **V₂** der Vertiefungen **13** hat sich gegenüber dem ursprünglichen Volumen **V₁** im entlasteten Zustand verringert, wobei nicht näher ersichtlich Luft aus den Vertiefungen **13** entwichen ist.

Bei einer unerwünschten Entlastung der Dichtwände **11,** beispielsweise aufgrund von Windlasten oder thermisch bedingten Formänderungen oder alterungsbedingt nachlassender Elastizität, entsteht in den Vertiefungen **13** gegenüber dem Umgebungsdruck jeweils ein Unterdruck, weil die Dichtwände **11** aufgrund ihrer elastischen Rückstellkraft weiterhin luftdicht an der Kontaktseite **7** anliegen und sich das Volumen **V₂** in den Vertiefungen **13** entsprechend wieder vergrößert, die Luftmenge in den Vertiefungen **13** jedoch konstant bleibt. Der Unterdruck beziehungsweise die Saugwirkung führt zu einer Verbesserung der Halteeigenschaften des Kantenschutzelements **1.**

Wie in **Fig. 1** bis **Fig. 3** schließlich zu erkennen ist, weist das Kantenschutzelement **1** zum Abtragen von Lasten in Längsrichtung des Modulrands **3** zwei seitliche Fortsätze **21** auf. Mit diesen Fortsätzen **21** ist das Kantenschutzelement **1** in Längsrichtung des Modulrands **3** an dem Haltekörper **15** beidseits formschlüssig festgelegt, sodass ein Verrutschen des Kantenschutzelements **1** in dieser Richtung ausgeschlossen ist. Das Kantenschutzelement **1** ist ein einschließlich dieser Haltefortsätze **21** sowie den Saugnapfelementen **10** aus einem EPDM-Material in einem Spritzgussverfahren einteilig hergestellt.

In einer nicht dargestellten Variante können an dem oberen Belag **19** ebenfalls Saugnapfelemente **10** angeordnet sein, wobei die Höhe des Kantenschutzelements **1** und/oder des Haltekörper **15** an den zusätzlichen Bauraumbedarf der dann sich gegenüberstehenden Saugnapfelemente geeignet angepasst ist.

## Patentansprüche

1. Kantenschutzelement **(1)** für eine Klemmeinrichtung **(2)** zum lokalen Befestigen eines Modulrands **(3)** eines ungerahmten PV-Moduls **(4)** an einer Tragstruktur **(5),** wobei das Kantenschutzelement **(1)** mindestens einen elastischen Belag **(6)** mit einer Vorderseite **(8)** und einer davon abgewandten Rückseite **(9)** aufweist, und der Belag **(6)** mittels seiner Rückseite **(9)** an der Klemmeinrichtung **(2)** und/oder zu der Tragstruktur **(5)** festlegbar ist, und gegenüber der Vorderseite **(8)** eine Kontaktseite **(7)** des Modulrands **(3)** angeordnet werden kann, **dadurch gekennzeichnet, dass** der elastische Belag **(6)** eine Vielzahl von Saugnapfelementen **(10)** mit jeweils umlaufend geschlossenen Dichtwänden **(11)** aufweist, die elastisch sind und von der Vorderseite **(8)** des elastischen Belags **(6)** abstehen und jeweils einen Öffnungsrand **(12)** aufweisen, und an den Öffnungsränder **(12)** die Kontaktseite **(7)** des Modulrands **(3)** dicht angelegt werden kann, und die Saugnapfelemente **(10)** innenseitig jeweils eine Vertiefung **(13)** enthalten, die an einer von dem Öffnungsrand **(12)** begrenzten Öffnung (**O**) offen und ansonsten luftdicht Ist, wobei das Volumen (**V₁**, **V₂**) der Vertiefungen **(13)** mit elastischer Verformung der Dichtwände **(11)** veränderbar ist.

2. Kantenschutzelement nach Anspruch 1, **dadurch gekennzeichnet, dass** das Kantenschutzelement an der Klemmeinrichtung **(2)** in Längsrichtung des zu befestigenden Modulrands **(3)** festgelegt ist.

3. Kantenschutzelement nach einem der vorhergehenden Ansprüche, **dadurch gekennzeichnet, dass** das Kantenschutzelement **(1)** im Querschnitt L- oder U-förmig ist.

4. Kantenschutzelement nach einem der vorhergehenden Ansprüche, **dadurch gekennzeichnet, dass** das Kantenschutzelement **(1)** einen zweiten solchen Belag mit Saugnapfelementen aufweist, wobei der zweite Belag dem ersten Belag **(6)** beabstandet gegenüberliegt und für eine zweite Kontaktseite des Modulrands **(3)** vorgesehen ist.

5. Kantenschutzelement nach einem der vorhergehenden Ansprüche, **dadurch gekennzeichnet, dass** die Dichtwände **(11)** rotationssymmetrisch geformt sind.

6. Kantenschutzelement nach einem der vorhergehenden Ansprüche, **dadurch gekennzeichnet, dass** sich die Wanddicke der Dichtwände **(11)** mit zunehmender Höhe bezüglich der Vorderseite **(8)** verjüngen.

7. Kantenschutzelement nach einem der vorhergehenden Ansprüche, **dadurch gekennzeichnet, dass** die Dichtwände **(11)** außenseitlg senkrecht bezüglich der Vorderseite **(8)** sind oder außenseitig steiler bezüglich der Vorderseite **(8)** sind als innenseitig.

8. Kantenschutzelement nach einem der vorhergehenden Ansprüche, **dadurch gekennzeichnet, dass** sich die Vertiefungen **(13)** mit zunehmender Tiefe verjüngen.

9. Kantenschutzelement nach einem der vorhergehenden Ansprüche, **dadurch gekennzeichnet, dass** der elastische Belag **(6)** zwischen 15 und 150 Saugnapfelemente **(10)** aufweist.

10. Kantenschutzelement nach einem der vorhergehenden Ansprüche, **dadurch gekennzeichnet, dass** die Höhe der Dichtwände **(11)** zu bezüglich des Modulrands **(3)** quer gerichteten Enden **(25)** des elastischen Belags **(6)** schrittweise abnimmt.

11. Kantenschutzelement nach einem der vorhergehenden Ansprüche, **dadurch gekennzeichnet, dass** das Kantenschutzelement **(1)** und/oder der elastische Belag **(6)** aus einem EPDM-Material besteht.

12. Anordnung mit einem Kantenschutzelement (1) nach einem der Ansprüche 1 bis 11 und mit einer Klemmeinrichtung **(2)** und einer Tragstruktur **(5)** und einem ungerahmten PV-Modul **(4), dadurch gekennzeichnet, dass** der Modulrand **(3)** des ungerahmten PV-Moduls **(4)** mittels der Klemmeinrichtung **(2)** an der Tragstruktur **(5)** befestigt ist, wobei der elastische Belag **(6)** mittels seiner Rückseite **(9)** an der Klemmeinrichtung (2) und/oder zu der Tragstruktur **(5)** festgelegt ist und die Kontaktseite **(7)** an den Öffnungsrändern **(12)** der Dichtwände **(11)** dicht anliegt.

13. Anordnung nach dem vorhergehenden Anspruch, **dadurch gekennzeichnet, dass** das ungerahmte PV-Modul **(4)** geneigt angeordnet ist und der Modulrand **(3)** ein schräg von oben nach unten verlaufender Modulrand **(3)** des ungerahmten PV-Moduls **(4)** ist.

14. Anordnung nach einem der Ansprüche 12 oder 13, **dadurch gekennzeichnet, dass** die Dichtwände **(11)** elastisch aufgeweitet und/oder gestaucht sind, sodass das Volumen **(V₂)** der Vertiefungen **(13)** kleiner ist, als das Volumen **(V₁)** der Vertiefungen **(13)** bei unbelasteten Dichtwänden **(11).**

15. Verfahren zum Befestigen eines Modulrands **(3)** eines ungerahmten PV-Moduls **(4)** mittels einer Klemmeinrichtung **(2)** mit einem Kantenschutzelement **(1)** nach einem der Ansprüche 1 bis 11, **dadurch gekennzeichnet, dass** bei einem Befestigen der Klemmelnrichtung **(2)** an der Tragstruktur **(5)** die Dichtwände **(11)** der Saugnapfelemente **(10)** und die Kontaktseite **(7)** des Modulrands **(3)** gegeneinander gedrückt werden, sodass das Volumen **(V₁)** der Vertiefungen **(13)** der Saugnapfelemente **(10)** verringert wird.

## Claims

1. Edge-protection element (1) for a clamping device (2) for locally fastening module edge (3) of a frameless PV module (4) on a supporting structure (5), wherein the edge-protection element (1) comprises at least one elastic covering (6) with a front side (8) and a rear side (9), which is directed away from the front side (8), and the covering (6) can be placed on the clamping device (2) and/or in relation to the supporting structure (5) by means of its rear side (9), and a contact side (7) of the module edge (3) can be arranged facing the front side (8), **characterized in that** the elastic covering (6) comprises a plurality of suction-cup elements (10) each with sealing walls (11) which are circumferentially closed, the sealing walls (11) are elastic, project from the front side (8) of the elastic covering (6) and each have an opening edge (12), and the contact side (7) of the module edge (3) can be tightly positioned on the opening edges (12), and the suction-cup elements (10) each have, on the inside, a depression (13) which is open at an opening (O) bounded by the opening edge (12) and is otherwise air-tight, wherein the volume (V₁, V₂) of the depressions (13) can be altered by elastic deformation of the sealing walls (11).

2. Edge-protection element according to Claim 1, **characterized in that** the edge-protection element is secured on the clamping device (2) in the longitudinal direction of the module edge (3) which is to be fastened.

3. Edge-protection element according to one of the preceding claims, **characterized in that** the edge-protection element (1) is L-shaped or U-shaped in cross section.

4. Edge-protection element according to one of the preceding claims, **characterized in that** the edge-protection element (1) comprises a second such covering with suction-cup elements, wherein the second covering is spaced apart opposite the first covering (6) and is provided for a second contact side of the module edge (3).

5. Edge-protection element according to one of the preceding claims, **characterized in that** the sealing walls (11) are formed in a rotationally symmetrical manner.

6. Edge-protection element according to one of the preceding claims, **characterized in that** the wall thickness of the sealing walls (11) tapers as the height of said walls increases in relation to the front side (8).

7. Edge-protection element according to one of the preceding claims, **characterized in that** the outside of the sealing walls (11) is perpendicular to the front side (8) or the outside is steeper than the inside in relation to the front side (8).

8. Edge-protection element according to one of the preceding claims, **characterized in that** the depressions (13) taper as the depth thereof increases.

9. Edge-protection element according to one of the preceding claims, **characterized in that** the elastic covering (6) comprises between 15 and 150 suction-cup elements (10).

10. Edge-protection element according to one of the preceding claims, **characterized in that** the height of the sealing walls (11) decreases in a stepwise manner towards the ends (25) of the elastic covering (6), said ends being directed transversely in relation to the module edge (3).

11. Edge-protection element according to one of the preceding claims, **characterized in that** the edge-protection element (1) and/or the elastic covering (6) consists/consist of an EPDM material.

12. Arrangement having an edge-protection element (1) according to one of Claims 1 to 11 and having a clamping device (2) and a supporting structure (5) and a frameless PV module (4), **characterized in that** the module edge (3) of the frameless PV module (4) is fastened on the supporting structure (5) by means of the clamping device (2), wherein the elastic covering (6) is placed on the clamping device (2) and/or in relation to the supporting structure (5) by means of its rear side (9), and the contact side (7) abuts in a sealed manner on the opening peripheries (12) of the sealing walls (11).

13. Arrangement according to the preceding claim, **characterized in that** the frameless PV module (4) is arranged in an inclined manner and the module edge (3) of the frameless PV module (4) is a module edge (3) running obliquely from top to bottom.

14. Arrangement according to either of Claims 12 and 13, **characterized in that** the sealing walls (11) are elastically widened and/or compressed, so that the volume (V₂) of the depressions (13) is smaller than the volume (V₁) of the depressions (13) when the sealing walls (11) are not subjected to load.

15. Method of fastening a edge (3) of a frameless PV module (4) by means of a clamping device (2) using an edge-protection element (1) according to one of Claims 1 to 11, **characterized in that**, when the clamping device (2) is being fastened on the supporting structure (5), the sealing walls (11) of the suction-cup elements (10) and the contact side (7) of the module edge (3) are pressed against one another, so that the volume (V₁) of the depressions (13) of the suction-cup elements (10) is reduced.

## Revendications

1. Élément de protection d'arête (1) pour un dispositif de serrage (2) destiné à la fixation locale d'un bord de module (3) d'un module PV sans cadre (4) sur une structure de support (5), l'élément de protection d'arête (1) comprenant au moins une garniture élastique (6) présentant un côté avant (8) et un côté arrière (9) opposé à celui-ci, et la garniture (6) pouvant être fixée, au moyen de son côté arrière (9), sur le dispositif de serrage (2) et/ou par rapport à la structure de support (5), et un côté de contact (7) du bord de module (3) pouvant être disposé en regard du côté avant (8), **caractérisé en ce que** la garniture élastique (6) comprend une pluralité d'éléments ventouse (10) présentant des parois d'étanchéité (11) à chaque fois fermées de manière périphérique, lesquelles sont élastiques et font saillie à partir du côté avant (8) de la garniture élastique (6) et comprennent à chaque fois un bord d'ouverture (12), et le côté de contact (7) du bord de module (3) pouvant être appliqué de manière étanche contre les bords d'ouverture (12), et les éléments ventouse (10) comportant du côté intérieur à chaque fois un creux (13) qui est ouvert au niveau d'une ouverture (0) limitée par le bord d'ouverture (12) et qui est autrement étanche à l'air, le volume (V₁, V₂) des creux (13) pouvant être modifié par déformation élastique des parois d'étanchéité (11).

2. Élément de protection d'arête selon la revendication 1, **caractérisé en ce que** l'élément de protection d'arête est fixé au dispositif de serrage (2) dans la direction longitudinale du bord de module (3) à fixer.

3. Élément de protection d'arête selon l'une quelconque des revendications précédentes, **caractérisé en ce que** l'élément de protection d'arête (1) est en forme de L ou en forme de U en section transversale.

4. Élément de protection d'arête selon l'une quelconque des revendications précédentes, **caractérisé en ce que** l'élément de protection d'arête (1) comprend une telle deuxième garniture présentant des éléments ventouse, la deuxième garniture étant espacée et opposée en regard de la première garniture (6) et étant prévue pour un deuxième côté de contact du bord de module (3).

5. Élément de protection d'arête selon l'une quelconque des revendications précédentes, **caractérisé en ce que** les parois d'étanchéité (11) sont formées de manière à présenter une symétrie de rotation.

6. Élément de protection d'arête selon l'une quelconque des revendications précédentes, **caractérisé en ce que** l'épaisseur de paroi des parois d'étanchéité (11) se rétrécit au fur et à mesure que la hauteur par rapport au côté avant (8) augmente.

7. Élément de protection d'arête selon l'une quelconque des revendications précédentes, **caractérisé en ce que** les parois d'étanchéité (11) au côté extérieur sont perpendiculaires par rapport au côté avant (8) ou au côté extérieur sont plus inclinées par rapport au côté avant (8) que du côté intérieur.

8. Élément de protection d'arête selon l'une quelconque des revendications précédentes, **caractérisé en ce que** les creux (13) se rétrécissent au fur et à mesure que la profondeur augmente.

9. Élément de protection d'arête selon l'une quelconque des revendications précédentes, **caractérisé en ce que** la garniture élastique (6) comprend entre 15 et 150 éléments ventouse (10).

10. Élément de protection d'arête selon l'une quelconque des revendications précédentes, **caractérisé en ce que** la hauteur des parois d'étanchéité (11) diminue graduellement en direction d'extrémités (25) de la garniture élastique (6) orientées transversalement par rapport au bord de module (3).

11. Élément de protection d'arête selon l'une quelconque des revendications précédentes, **caractérisé en ce que** l'élément de protection d'arête (1) et/ou la garniture élastique (6) est/sont constitué(e)(s) d'un matériau EPDM.

12. Agencement comprenant un élément de protection d'arête (1) selon l'une quelconque des revendications 1 à 11, et comprenant un dispositif de serrage (2) et une structure de support (5) et un module PV sans cadre (4), **caractérisé en ce que** le bord de module (3) du module PV sans cadre (4) est fixé sur la structure de support (5) au moyen du dispositif de serrage (2), la garniture élastique (6) étant fixée, au moyen de son côté arrière (9), sur le dispositif de serrage (2) et/ou par rapport à la structure de support (5) et le côté de contact (7) s'appliquant de manière étanche contre les bords d'ouverture (12) des parois d'étanchéité (11).

13. Agencement selon la revendication précédente, **caractérisé en ce que** le module PV sans cadre (4) est disposé de manière inclinée et le bord de module (3) est un bord de module (3) du module PV sans cadre (4) s'étendant de manière oblique du haut vers le bas.

14. Agencement selon l'une des revendications 12 ou 13, **caractérisé en ce que** les parois d'étanchéité (11) sont évasées et/ou refoulées élastiquement de telle sorte que le volume (V₂) des creux (13) soit inférieur au volume (V₁) des creux (13) lorsque les parois d'étanchéité (11) ne sont pas sollicitées.

15. Procédé de fixation d'un bord de module (3) d'un module PV sans cadre (4) au moyen d'un dispositif de serrage (2) avec un élément de protection d'arête (1) selon l'une quelconque des revendications 1 à 11, **caractérisé en ce que** lors d'une fixation du dispositif de serrage (2) sur la structure de support (5), les parois d'étanchéité (11) des éléments ventouse (10) et le côté de contact (7) du bord de module (3) sont pressés les uns contre les autres de telle sorte que le volume (V₁) des creux (13) des éléments ventouse (10) soit réduit.
